# EUROPEAN PATENT SPECIFICATION

(11) **EP 4 237 812 B1**
(45) Date of publication and mention of the grant of the patent: **18.02.2026**
(21) Application number: 21807473.0
(22) Date of filing: 29.10.2021
(51) Int. Cl.: G01M 3/18, G01M 3/16

(54) **SYSTEMS AND METHODS FOR ON-BOARD LEAK DETECTION AND MANAGEMENT**
SYSTEME UND VERFAHREN ZUR ORTUNG UND VERWALTUNG VON LECKAGEN
SYSTÈMES ET PROCÉDÉS DE DÉTECTION ET DE GESTION DE FUITES À BORD DES VÉHICULES

(30) Priority: 30.10.2020 NL 2026801
(43) Date of publication of application: 06.09.2023
(73) Proprietor: Microsoft Technology Licensing, LLC, Redmond, WA 98052 (US)
(72) Inventor: MAYER, David William, Redmond, Washington 98052 (US); SHEN, Fenghua, Redmond, Washington 98052 (US); GARTON, Chadd Nathaniel, Redmond, Washington 98052 (US); LANKSTON, Robert Jason, II, Redmond, Washington 98052 (US)
(74) Representative: CMS Cameron McKenna Nabarro Olswang LLP
(86) International application number: PCT/US2021/057411
(87) International publication number: WO 2022/094316

(56) References cited:
- US-A1- 2016 178 475
- US-B1- 10 107 708
- US-B1- 6 526 807
- US-B1- 6 639 517

## Description

### BACKGROUND

### Background and Relevant Art

As information technology equipment has changed, higher cooling capacity solutions are needed to support the computing power for Artificial Intelligence and Machine Learning applications. Air cooling with on-chip heat sinks and remote heat sinks become unfeasible with higher power chips resulting in the need for liquid cooling via cold plates or immersion cooling. Liquid cooled systems using cold plate technology come with a potential failure in leaks causing hardware damage and unsafe working conditions. Robust design to minimize leaks along with detection time and reliability are needed for successful implementation of liquid cold plate technology.
US 2016178475 A1 describes a computing system having a circuit for detecting a leak of a liquid in the cooling system and associated techniques and configurations. In some embodiments, the computing system includes a server board having a cooling system, and the circuit, wherein the circuit includes a first conducting element disposed on a substrate and coupled to a first voltage and a second conducting element disposed on the substrate and coupled to a second voltage. The first and second conducting elements are proximately disposed near each other, and the proximate positions are selected such that voltage across the conducting elements changes when a liquid is in simultaneous contact with the two conducting elements. In some embodiments, a detection circuit is coupled to the two electrodes to detect when the liquid is in simultaneous contact with the two conducting elements. Other embodiments may be disclosed and/or claimed.
US 6 639 517 B1 describes a water leak detector system with alarm that can be used to monitor inaccessible areas under various household appliances and warn of water leaks. A leak detection mat, having base layer of varying and appropriate sizes has disposed on it one or more pairs of electrodes arranged in a pattern around the upper surface of the base mat such that the two wires of each pair are parallel to the other and generally separated at a constant distance, and together the pair is positioned in a pattern across the surface. An absorbent layer is affixed to the base layer, covering and in contact with the electrodes. The absorbent layer may be impregnated with a soluble ionic salt to increase electrical conductivity when the adsorbent layer is wetted. A sensing and transmitting circuit having two input connections is affixed to the base substrate, with one end of each electrode attached to one of the input connections of the sensing and transmitting circuit. A plurality of leak detection mats may be used in a single system, each mat located under a potential water leak source. Upon water falling upon and being adsorbed by the adsorbent layer, the electrical resistance between the two electrodes at points nearest the leak will decrease. This decrease in resistance is detected by the sensing and transmitting circuit, which transmits a signal. An alarm unit receives the signal and activates an audible and/or visual alarm, the signal being sent either by radio waves or by an electrical signal through wires. The alarm unit is capable of monitoring a plurality of leak detection mats.
US 6 526 807 B1 describes a system for early detection of water leaks at particular locations in any water-dependent appliance and apparatus used in multi-dwelling facilities. A central control apparatus electrically interconnected with a plurality of circuits that enable water leaks to be accurately detected in a diversity of devices including air conditioners, compressor coils, hot water appliances, and pipes, and for communicating the severity of the water-related problem. A plurality of water sensors are incorporated into specially designed probes of the preferred embodiment of the present invention wherein water leaks may be accurately and reliably detected in a diversity of water-dependent appliances and devices. A specially designed fiber glass cloth functions as a probe for sensing water leaks via its built-in plurality of sensors constructed from a corresponding plurality of conductive wires enables the location and extent of a water leak to be ascertained. The apparatus is designed to be easily installed and to be inherently devoid of any safety hazards. Specially color-coded wires enable particular appliances and pipes to be properly interconnected wherein water leaks may be detected early enough to prevent consequent water-damage. A detection transmitter contained with a central control housing uses information retrieved from a database to communicate the location and extent of water leaks to contact personnel disposed at a plurality of remote receivers. Transmission of voice and data alert and warning messages is effectuated via telephone lines and cellular communications.
US 10107708 B1 describes a system for detecting a leak or spill and mitigating losses resulting therefrom comprising a floor covering and a software application. The floor covering includes a sensor assembly, a processing element, and a transmitter. The sensor assembly generates information when exposed to liquid. The processing element determines a location of the liquid based upon the information from the sensor assembly. The transmitter transmits data regarding the liquid. The software application executes on an electronic device and is operable to receive data from the floor covering regarding the liquid; display a message that liquid has been detected on the floor covering; calculate an area of the liquid; determine whether a leak is still occurring and if so, shut an electronically controllable valve; transmit data regarding the liquid to an insurance provider; and/or receive insurance-related information from the insurance provider, such as information related to a proposed insurance claim or estimated damage.

### BRIEF SUMMARY

The invention is set out in the appended set of claims.

The invention as claimed discloses a system for detecting liquid leaks in an electronic device, according to appended claim 1.

This Summary is provided to introduce a selection of concepts in a simplified form that are further described below in the Detailed Description. This Summary is not intended to identify key features or essential features of the claimed subject matter.

Additional features and advantages will be set forth in the description which follows, and in part will be obvious from the description, or may be learned by the practice of the teachings herein. Features and advantages of the disclosure may be realized and obtained by means of the instruments and combinations particularly pointed out in the appended claims. Features of the present disclosure will become more fully apparent from the following description and appended claims or may be learned by the practice of the disclosure as set forth hereinafter, with the scope of the invention as claimed defined by the appended claims.

### BRIEF DESCRIPTION OF THE DRAWINGS

In order to describe the manner in which the above-recited and other features of the disclosure can be obtained, a more particular description will be rendered by reference to specific embodiments thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example embodiments, the embodiments will be described and explained with additional specificity and detail through the use of the accompanying drawings in which:
FIG. 1 is a schematic representation of a server row with a liquid cooling system, according to at least some embodiments of the present disclosure;
FIG. 2 is a schematic representation of a server rack with a liquid cooling system, according to at least some embodiments of the present disclosure;
FIG. 3 is a perspective view of a computer board with a cooling plate and a leak detection system, according to at least some embodiments of the present disclosure;
FIG. 4 is a flowchart illustrating a method of detecting leaks in a computer system, according to at least some embodiments of the present disclosure;
FIG. 5 is a plan view of a dot array, according to at least some embodiments of the present disclosure;
FIG. 6 is a plan view of a concentric array, according to at least some embodiments of the present disclosure;
FIG. 7-1 is a plan view of a fluid leak detection on a dot array, according to at least some embodiments of the present disclosure; and
FIG. 7-2 is a plan view of the fluid leak on the dot array of FIG. 7-1 with the fluid leak growing in size, according to at least some embodiments of the present disclosure.

### DETAILED DESCRIPTION

The present disclosure relates generally to systems and methods for detecting liquid. More particularly, the present disclosure relates to devices, systems, and methods for detecting liquid leaks in an electronic device and/or in the environment in which an electronic device is operated. According to the invention as claimed, a leak detection system includes a substrate with a plurality of high-voltage contacts and a plurality of low-voltage contacts. When a conductive material, such as a conductive fluid, contacts both a high-voltage contact and a low-voltage contact, a circuit can be completed that indicates a leak of the conductive fluid.

In some embodiments, the plurality of high-voltage contacts and plurality of low-voltage contacts are positioned in an array. The array may facilitate determination of one or more of a location, size, severity, or rate of growth of the leak (e.g., by a logic device electrically coupled to the plurality of high-voltage contacts and the plurality of low-voltage contacts). For example, the array of the plurality of high-voltage contacts and plurality of low-voltage contacts may be arranged such that a conductive fluid that contacts the substrate and/or array completes a specific circuit that is associated with a specific location on the substrate and/or array.

In some examples, the array of the plurality of high-voltage contacts and plurality of low-voltage contacts may be arranged such that the number of circuits completed by the conductive material in contact with the substrate and/or array indicates an area and/or volume of the conductive material.

In some examples, the array of the plurality of high-voltage contacts and plurality of low-voltage contacts may be arranged such that the circuits completed by the conductive material in contact with the substrate and/or array is associated with one or more electronic components of an electronic device. For example, the array can be arranged such that a logic device can determine where a leak has occurred, and the logic device may shut down or sleep one or more components of the electronic device board near or adjacent the leak.

In some examples, the array of the plurality of high-voltage contacts and plurality of low-voltage contacts may be arranged such that the number of circuits completed by the conductive material in contact with the substrate and/or array is sampled repeatedly over time to monitor a rate of growth of the leak. The logic device can determine how rapid and/or strongly the leak detection system can respond to the detected leak. In some embodiments, the logic device activates an alarm to alert technicians to the presence of a leak. In some embodiments, the logic device disables a cooling fluid pump to stop cooling fluid flow to the source of the leak. In some embodiments, the logic device disables at least a portion of an electronic device proximate the leak to limit and/or prevent damage to the electronic device. Proximate electronic devices may, for example, include electronic devices that are directly adjacent, adjacent, or abutting the logic device.

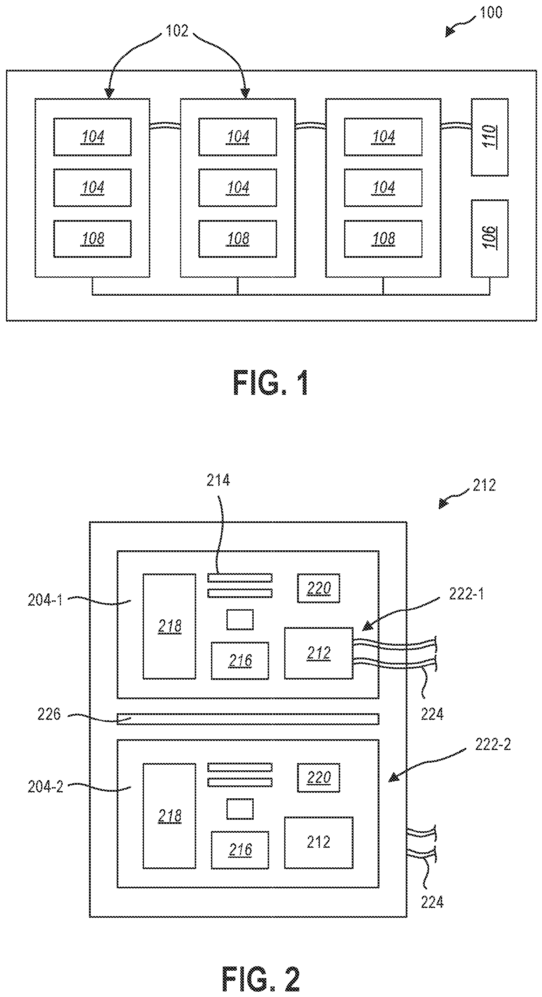

An example environment in which leak detection systems and methods according to the present disclosure may be used is a server array, such as the embodiment illustrated in FIG. 1. In some embodiments, server computers are arranged in a row 100, where the row 100 contains a plurality of server racks 102, each of which contain a plurality of server computers 104. In some examples, the server computer 104 is a blade server. In some examples, the server computers 104 are complete computers (i.e., each server computer can function as a standalone computer). In some examples, the server computers 104 are electronic components that can cooperate to provide scalable computational power.

The server row 100 can include a row manager 106 that is in communication with a rack manager 108 of the server racks 102 of the server row 100. In some embodiments, the row manager 106 controls computational loads, such as process allocations, of the server racks 102 and/or server computers 104. In doing so, the row manager 106 may control the amount of heat generated by the server computers 104 of the server racks 102. In some embodiments, the row manager 106 controls thermal management of the server racks 102 and/or server computers 104. For example, the row manager 106 can manage active thermal management for the server racks 102 and/or server computers 104 by changing fan speed or by controlling the flow rate of a cooling fluid for liquid cooling systems. In at least one example, the server row 100 is at least partially cooled by a liquid cooling system 110 that delivers cooling fluid to the server racks 102 of the server row 100. The row manager is in communication with the cooling fluid pump to change or stop the flow of cooling fluid.

A thermal management system uses liquid cooling fluid to remove heat from an electronic device to prevent damage to the electronic device during operation. A liquid cooling system may include a recirculating liquid cooling system with a cooling plate or an immersion cooling system. In some embodiments, the immersion cooling system includes a localized frame that contains cooling fluid to immerse only select components of an electronic device in the cooling fluid. The liquid cooling system may be a single-phase liquid cooling system or a two-phase liquid cooling system.

A leak detection system, according to some embodiments of the present disclosure, may be positioned in at least one of the server racks 102 and in data communication with the row manager 106. The leak detection system can communicate with the row manager 106 to provide information regarding the presence, size, severity, movement, or type of fluid leak in the server row 100. In some embodiments, a substrate with a plurality of high-voltage contacts and low-voltage contacts is positioned in each of the server racks. In some embodiments, a substrate with a plurality of high-voltage contacts and low-voltage contacts is positioned in at least some of the server computers. In some embodiments, a substrate with a plurality of high-voltage contacts and low-voltage contacts is positioned between server computers within a server rack.

A server rack can support a plurality of server computers in the rack. In some embodiments, a first server computer is positioned vertically above a second server computer. The server computers may each have liquid cooling, such as localized immersion cooling for at least some electronic components of the server computer, or a cooling plate with recirculating cooling fluid to cool the electronic component(s) of the server computer. In some embodiments, a substrate with a plurality of high-voltage contacts and low-voltage contacts is positioned between the first server computer and the second server computer to detect any drops of cooling fluid that leak from the liquid cooling system. In some embodiments, a substrate with a plurality of high-voltage contacts and low-voltage contacts is positioned adjacent to the board of the server computer to detect any drops of cooling fluid that leak from the liquid cooling system.

FIG. 2 is a schematic representation of an embodiment of a server rack 202 with a first server computer 204-1 and a second server computer 204-2 positioned below the first server computer 204-1. Each of the server computers 204-1, 204-2 have a plurality of electronic components, for example, two or more of a processor 212, volatile memory 214, a communication device 216, non-volatile memory 218, other controllers 220, etc. In some embodiments, a first server computer 204-1 includes a cooling plate 222-1 that provides thermal management to one of the electronic components, such as the processor 212. In some embodiments, a second server computer 204-2 includes a cooling plate 222-2 that provides thermal management to the entire board of the second server computer 204-2.

Fluid conduits 224 connect the cooling plates 222-1, 222-2 to a cooling fluid reservoir or pump that supplies cooling fluid to the cooling plates 222-1, 222-2. In some embodiments, the couplings between the fluid conduits 224 and the cooling plates 222-1, 222-2 can be a potential leak point. In some embodiments, the cooling plates 222-1, 222-2 themselves can be damaged or worn and become a potential leak point. A leak detection system 226, according to the present disclosure, can be positioned adjacent to and/or below a potential leak point to detect and measure leaks from a liquid cooling system.

In some embodiments, the electronic components, such as server computers, of the server rack are in data communication with a rack manager. The rack manager may control power delivery to the server computers or other electronic components. In some embodiments, the rack manager may communicate with the server computers or other electronic components to power cap or throttle the server computers or other electronic components and manage power draw. The rack manager, in some embodiments, is also in communication with a cooling fluid pump of the liquid cooling system that moves cooling fluid to one or more server computers or other electronic components in the server rack.

A logic device according to the present disclosure receives an electronic signal from the substrate with the plurality of high-voltage contacts and plurality of low-voltage contacts. The electrical signal can provide information to the logic device about the location, size, severity, or rate of growth of the leak. The logic device can then alert technicians, communicate with the cooling fluid pump or another part of the liquid cooling system (i.e., close a valve), communicate with proximate electronic components to safely shut down or disable those components, or combinations thereof. In some embodiments, the logic device is in communication with the rack manager. In some embodiments, the logic device is integrated with and part of the rack manager, such that the rack manager can control the server computers and the liquid cooling system in relation to detected leaks.

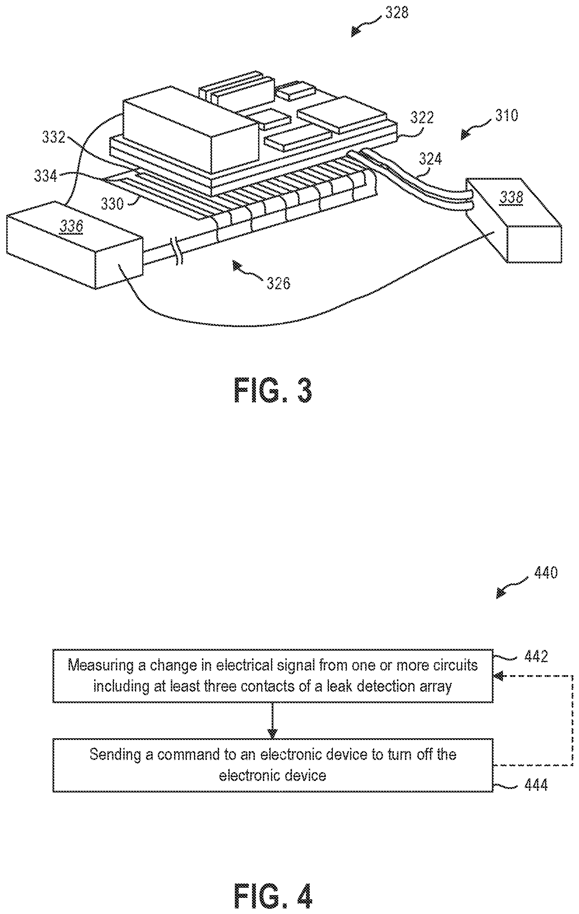

FIG. 3 is a perspective view of a computer board 328 with a plurality of electronic components that is cooled by a liquid cooling system 310. A leak detection system 326 is positioned adjacent the cooling plate 322 and fluid couplings of the fluid conduits 324 to monitor for leaks. A substrate 330 and associated array of plurality of high-voltage contacts 332 and plurality of low-voltage contacts 334 can be positioned proximate to the computer board 328 with electronic components thereon, and the logic device 336 can identify a location of a detected leak. The location of the leak can be identified relative to the electronic components of the server computer by identifying which of the high-voltage contacts 332 and low-voltage contacts 334 are connected by the fluid leaked on the substrate 330. The leak detection system 326 can communicate with one or more of the electronic components of the computer board 328, the cooling fluid pump 338, or other devices.

The leak detection system includes at least a substrate and a logic device, where the substrate has a plurality of high-voltage contacts and plurality of low-voltage contacts on a surface thereof. The plurality of high-voltage contacts and plurality of low-voltage contacts are connected to the logic device such that any conductive material that provides electrical coupling of a high-voltage contact and a low-voltage contact will complete a circuit between the contacts. The logic device may, based on one or more of voltage, current, location, or other properties of the completed circuit, receive information regarding a detected leak.

In some embodiments, the substrate is a non-conductive material such that the plurality of high-voltage contacts and plurality of low-voltage contacts are insulated from one another by the substrate. The substrate can include a plurality of posts or pads to which wires can connect to the plurality of high-voltage contacts and plurality of low-voltage contacts. The wires communicate the electrical signals to the logic device. In some embodiments, the substrate is planar. In some embodiments, the substrate is curved to wrap around an electronic component. In some embodiments, the substrate has a surface that is complementarily shaped to the topography of the computer board to keep the array at a constant distance from the components. In at least one embodiment, the substrate is concave to collect fluid from the leak to measure the rate of the leak without the cooling fluid (or other leaking fluid) running off of the substrate and plurality of high-voltage contacts and plurality of low-voltage contacts without the leak detection system identifying a change in volume.

The voltages of the plurality of high-voltage contacts and plurality of low-voltage contacts should be understood to be relative to one another. In some embodiments, a high-voltage contact has a positive voltage, and a low-voltage contact has a negative voltage. In some embodiments, the high-voltage contact has a higher voltage than the low-voltage contact. For example, a high-voltage contact may be a 5 Volt (V) contact, and a low-voltage contact may be a 0 V contact. In some embodiments, a voltage between the high-voltage contact and the low-voltage contact is in a range having an upper value, a lower value, or upper and lower values including any of 0.5 V, 1 V, 5 V, 10 V, 15 V, 20 V, 25 V, 50 V, or 100 V. In some examples, the voltage is greater than 0.5 V. In some examples, the voltage is less than 100 V. In some examples, the voltage is in a range between 0.5 V and 100 V. In some examples, the voltage is in a range between 1 V and 20 V.

The voltage between a high-voltage contact and a low-voltage contact can be related to the distance between the neighboring contacts. For example, the voltage between contacts with 1-centimeter spacing therebetween may be greater than the voltage between contacts spaced 3 millimeters apart. The voltage between neighboring contacts can be related to the cooling fluid used in the liquid cooling system. For example, a greater voltage can be applied when the conductivity of the cooling fluid is relatively low. When using a cooling fluid with higher electrical conductivity, the voltage applied across the contacts may be lower.

The logic device according to the invention as claimed, is connected to the plurality of high-voltage contacts and plurality of low-voltage contacts to receive electrical signals from the plurality of high-voltage contacts and plurality of low-voltage contacts when connected by the leaking fluid. The logic device may be configured to measure the current and voltage changes as the electrical signal changes in response to fluid touching the contacts.

In some embodiments, the logic device also includes a processor and a hardware storage device. The processor may receive information from the electrical signals and communicate with one or more other devices according to instructions stored on the hardware storage device that cause the processor to perform any of the methods described herein. In some embodiments, the devices in communication with the logic device that may receive instructions from the logic device in response to detecting a leak includes a cooling fluid pump or another thermal management device, a power supply that provides power to electronic components, the electronic components themselves, or other devices. For example, the logic device may stop the flow of cooling fluid by turning off the cooling fluid pump or by actuating a valve. In other examples, the logic device may send a signal to a power supply for the server rack or row to turn off power to the electronic devices in the rack or row to limit and/or prevent electrical damage due to the leak.

The hardware storage device can be any non-transient computer readable medium that may store instructions thereon. The hardware storage device may be any type of solid-state memory; volatile memory, such as static random access memory (SRAM) or dynamic random access memory (DRAM); non-volatile memory, such as read-only memory (ROM) including programmable ROM (PROM), erasable PROM (ERPOM) or EEPROM; magnetic storage media, such as magnetic tape; a platen-based storage device, such as hard disk drives; optical media, such as compact discs (CD), digital video discs (DVD), Blu-ray Discs, or other optical media; removable media such as USB drives; non-removable media such as internal SATA or non-volatile memory express (NVMe) style NAND flash memory; or any other non-transient storage media.

In some embodiments, a method 440 of detecting leaks according to the present disclosure includes measuring a change in electrical signal from one or more circuits including at least three contacts of a leak detection array at 442, as shown in FIG. 4. For example, the method can include measuring a first electrical signal on a first circuit including a high-voltage contact and a first low-voltage contact while also measuring a second electrical signal on a second circuit including the high-voltage contact and a second low-voltage contact. In another example, the method can include measuring an electrical signal on a circuit including a two high-voltage contact and a low-voltage contact. In yet another example, the method can include measuring a plurality of electrical signals from two high-voltage contacts and two low-voltage contacts connected by a conductive fluid. The method further includes sending a command to an electronic device to turn off the electronic device at 444. In some embodiments, the electronic device is a server computer. In some embodiments, the electronic device is a component of the liquid cooling system.

To measure a location and size of a fluid leak, substrates according to the present disclosure have arrays of contacts including a plurality of high-voltage contacts and a plurality of low-voltage contacts where each contact has a neighboring contact of the other type. In some embodiments, the method may include measuring a severity of the leak by measuring a change in total current through the circuit(s) completed by the fluid. In some embodiments, the method may include measuring a severity of the leak by measuring a change in total voltage across the circuit(s) completed by the fluid.

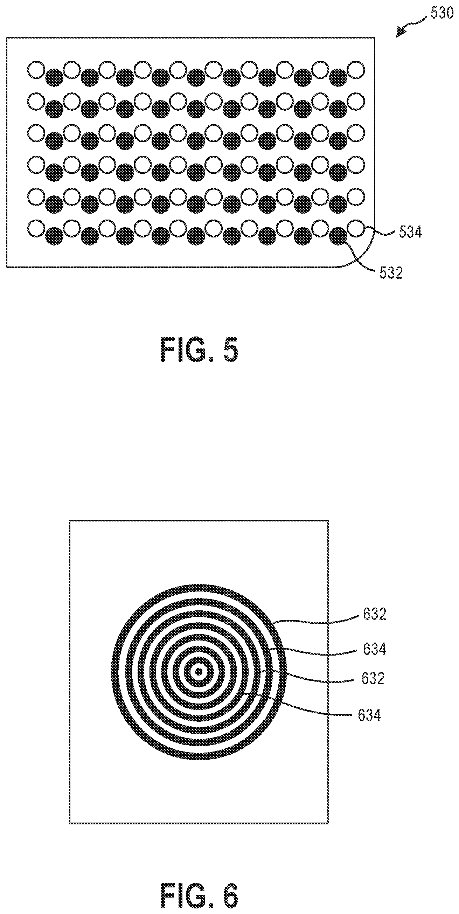

In some embodiments, a contact array includes a dot array with contacts that are individual dots arranged in a checkerboard pattern, such as the embodiment illustrated in FIG. 5, where each high-voltage contact 532 has a plurality of neighboring low-voltage contacts 534 on the substrate 530 and each low-voltage contact 534 has a plurality of neighboring high-voltage contacts 532. In other embodiments, the dot array can be arranged in a triangular grid, a hexagonal grid, an irregular grid, or other arrangements of the dots. In some embodiments, the closest contact to each high-voltage contact is a low-voltage contact and the closest contact to each low-voltage contact is a high-voltage contact.

A dot array can be used when location information is desired or beneficial. The dot array can complete circuits between high-voltage and low-voltage contacts, and, when the particular contacts of the circuit are identified, the location of the contacts can indicate the location of the fluid on the substrate/array and, in some embodiments, the location of the leak.

In some embodiments such as that illustrated in FIG. 6, the plurality of high-voltage contacts 632 and plurality of low-voltage contacts 634 are arranged in a concentric pattern where the plurality of high-voltage contacts 632 and a plurality of low-voltage contacts 634 are concentric traces. In a specific example, the concentric traces are circular, creating a bullseye pattern where each radially neighboring ring of the bullseye pattern alternates between a low-voltage contact and a high-voltage contact. In other words, as one moves away from the center of the bullseye pattern, the concentric contacts alternate between a low-voltage contact and a high-voltage contact. In some embodiments, the concentric pattern of the plurality of high-voltage contacts and a plurality of low-voltage contacts may be other shapes, such as rectangles, ovals, squares, hexagons, irregular shapes, any other closed shape, or open shapes. Concentric patterns can allow large area coverage with less discrete contacts for simpler and cheaper manufacturing. Concentric patterns may provide less location information than a dot array while still providing leak size information based on the number of arrays contacted by the fluid.

In some embodiments, the array can be a set of parallel traces. Parallel traces, like concentric patterns, can provide leak size information while providing less location information than a dot array. However, parallel traces are easy and cheap to manufacture for larger area arrays.

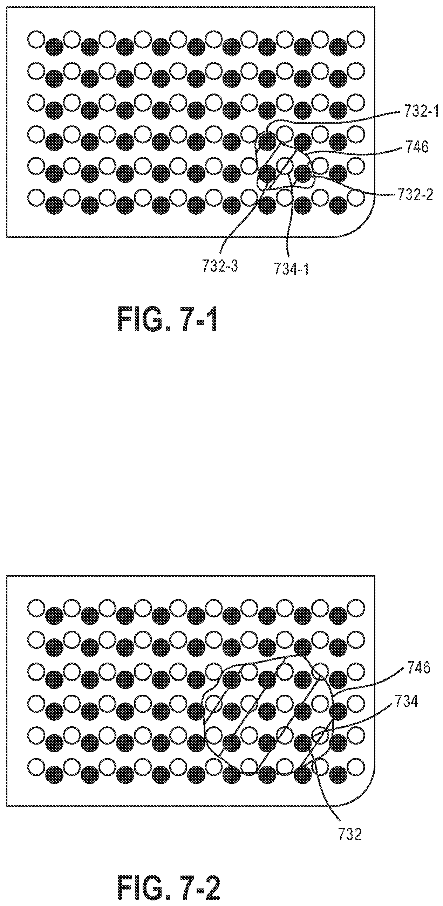

A contact array with a plurality of high-voltage contacts and a plurality of low-voltage contacts can provide location information, such as illustrated in FIG. 7-1 and 7-2. Each contact of the plurality of high-voltage contacts 732 and plurality of low-voltage contacts 734 can be associated with a different electrical connection to the logic device. The electrical signal from those specific contacts, therefore, can be associated with a location in the dot array. For example, a conductive fluid 746 that provides electrical conductivity between a first high-voltage contact 732-1 and a first low-voltage contact 734-1 can be determined by the logic device to be at the illustrated location on the dot array. Similarly, a size of the conductive fluid 746 can be measured by the logic device because the conductive fluid completes circuits including the first high-voltage contact 732-1, a second high-voltage contact 732-2, a third high-voltage contact 732-3, and the first low-voltage contact 734-1.

The logic device can continue to monitor the electrical signals, and changes in the electrical signals can indicate growth or movement of the conductive fluid 746. FIG. 7-2 illustrates the array of FIG. 7-1, but the pool of conductive fluid 746 has grown to encompass a larger number of high-voltage contacts 732 and low-voltage contacts 734. The logic device may measure the change in electrical signal and send signals to more aggressively react to or intervene in response to the growing leak of conductive fluid 746. As described herein, the logic device may use the location information of the leak to identify nearby or adjacent electronic components and shut down those components. In the event of a leak of increasing size, more severe responses may be warranted, such as shutting down the server computer, shutting down all server computers below the leak (as the fluid may drip downward), shutting down the power supply to the server rack, or turning off the cooling fluid pump.

### INDUSTRIAL APPLICABILITY

The present disclosure relates generally to systems and methods for detecting liquid. More particularly, the present disclosure relates to devices, systems, and methods for detecting liquid leaks in an electronic device and/or in the environment in which an electronic device is operated. According to the invention as claimed, the leak detection system includes a substrate with a plurality of high-voltage contacts and a plurality of low-voltage contacts. When a conductive material, such as a conductive fluid, contacts both a high-voltage contact and a low-voltage contact, a circuit can be completed that indicates a leak of the conductive fluid.

In some embodiments, the plurality of high-voltage contact and plurality of low-voltage contacts are positioned in an array. The array may allow a location, size, severity, or rate of growth of the leak to be determined by a logic device electrically coupled to the plurality of high-voltage contacts and the plurality of low-voltage contacts. For example, the array of the plurality of high-voltage contacts and plurality of low-voltage contacts may be arranged such that a conductive fluid that contacts the substrate and/or array completes a specific circuit that is associated with a specific location on the substrate and/or array.

In some examples, the array of the plurality of high-voltage contacts and plurality of low-voltage contacts may be arranged such that the number of circuits completed by the conductive material in contact with the substrate and/or array indicates an area and/or volume of the conductive material.

In some examples, the array of the plurality of high-voltage contacts and plurality of low-voltage contacts may be arranged such that the circuits completed by the conductive material in contact with the substrate and/or array is associated with one or more electronic components of an electronic device. For example, the array can be arranged such that a logic device can determine where a leak has occurred, and the logic device may shut down or sleep one or more components of the electronic device board near or adjacent the leak.

In some examples, the array of the plurality of high-voltage contacts and plurality of low-voltage contacts may be arranged such that the number of circuits completed by the conductive material in contact with the substrate and/or array is sampled repeatedly over time to monitor a rate of growth of the leak. The logic device can determine how rapid and/or strongly the leak detection system can respond to the detected leak. In some embodiments, the logic device activates an alarm to alert technicians to the presence of a leak. In some embodiments, the logic device disables a cooling fluid pump to stop cooling fluid flow to the source of the leak. In some embodiments, the logic device disables at least a portion of an electronic device proximate the leak to limit and/or prevent damage to the electronic device.

An example environment in which leak detection systems and methods according to the present disclosure may be used is a server array. In some embodiments, server computers are arranged in a row, where the row contains a plurality of server racks, each of which contain at a plurality of server computers. In some examples, the server computer is a blade server. In some examples, the server computers are complete computers (e.g., each server computer can function as a standalone computer). In some examples, the server computers are electronic components that can cooperate to provide scalable computational power.

The server row can include a row manager that is in communication with the server racks of the server row. In some embodiments, the row manager controls computational loads, such as process allocations, of the server racks and/or server computers. In doing so, the row manager may control the amount of heat generated by the server computers of the server racks. In some embodiments, the row manager controls thermal management of the server racks and/or server computers. For example, the row manager can manage active thermal management for the server racks and/or server computers by changing fan speed or by controlling the flow rate of a cooling fluid for liquid cooling systems. In at least one example, the server row is at least partially cooled by a liquid cooling system that delivers cooling fluid to the server racks of the server row. The row manager is in communication with the cooling fluid pump to change or stop the flow of cooling fluid.

A leak detection system, according to some embodiments of the present disclosure, may be positioned in at least one of the server racks and in data communication with the row manager. The leak detection system can communicate with the row manager to provide information regarding the presence, size, severity, movement, or type of fluid leak in the server row. In some embodiments, a substrate with a plurality of high-voltage contacts and low-voltage contacts is positioned in each of the server racks. In some embodiments, a substrate with a plurality of high-voltage contacts and low-voltage contacts is positioned in at least some of the server computers. In some embodiments, a substrate with a plurality of high-voltage contacts and low-voltage contacts is positioned between server computers within a server rack.

A server rack can support a plurality of server computers in the rack. In some embodiments, a first server computer is positioned vertically above a second server computer. The server computers may each have liquid cooling, such as localized immersion cooling for at least some electronic components of the server computer, or a cooling plate with recirculating cooling fluid to cool the electronic component(s) of the server computer. In some embodiments, a substrate with a plurality of high-voltage contacts and low-voltage contacts is positioned between the first server computer and the second server computer to detect any drops of cooling fluid that leak from the liquid cooling system. In some embodiments, a substrate with a plurality of high-voltage contacts and low-voltage contacts is positioned adjacent to the board of the server computer to detect any drops of cooling fluid that leak from the liquid cooling system.

In some embodiments, the electronic components, such as server computers, of the server rack are in data communication with a rack manager. The rack manager may control power delivery to the server computers or other electronic components. In some embodiments, the rack manager may communicate with the server computers or other electronic components to power cap or throttle the server computers or other electronic components and manage power draw. The rack manager, in some embodiments, is also in communication with a cooling fluid pump that moves cooling fluid to one or more server computers or other electronic components in the server rack.

A logic device according to the present disclosure receives an electronic signal from the substrate with the plurality of high-voltage contacts and plurality of low-voltage contacts. The electrical signal can provide information to the logic device about the location, size, severity, or rate of growth of the leak. The logic device can then alert technicians, communicate with the cooling fluid pump or another part of the liquid cooling system (i.e., close a valve), communicate with proximate electronic components to safely shut down or disable those components, or combinations thereof. In some embodiments, the logic device is in communication with the rack manager. In some embodiments, the logic device is integrated with and part of the rack manager, such that the rack manager can control the server computers and the liquid cooling system in relation to detected leaks.

A substrate and associated array of plurality of high-voltage contacts and plurality of low-voltage contacts can be positioned proximate a computer board with electronic components thereon, and the logic device can identify a location of a detected leak. The location of the leak can be identified relative to the electronic components of the server computer by identifying which of the high-voltage contacts and low-voltage contacts are connected by the fluid leaked on the substrate.

The leak detection system includes at least a substrate and a logic device, where the substrate has a plurality of high-voltage contacts and plurality of low-voltage contacts on a surface thereof. The plurality of high-voltage contacts and plurality of low-voltage contacts are connected to the logic device such that any conductive material that provides electrical coupling of a high-voltage contact and a low-voltage contact will complete a circuit between the contacts. The logic device may, based on voltage, current, location, or other properties of the completed circuit, receive information regarding a detected leak.

In some embodiments, the substrate is a non-conductive material such that the plurality of high-voltage contacts and plurality of low-voltage contacts are insulated from one another by the substrate. The substrate can include a plurality of posts or pads to which wires can connect to the plurality of high-voltage contacts and plurality of low-voltage contacts. The wires communicate the electrical signals to the logic device. In some embodiments, the substrate is planar. In some embodiments, the substrate is curved to wrap around an electronic component. In some embodiments, the substrate has a surface that is complementarily shaped to the topography of the computer board to keep the array at a constant distance from the components. In at least one embodiment, the substrate is concave to collect fluid from the leak to measure the rate of the leak without the cooling fluid (or other leaking fluid) running off of the substrate and plurality of high-voltage contacts and plurality of low-voltage contacts without the leak detection system identifying a change in volume.

The voltages of the plurality of high-voltage contacts and plurality of low-voltage contacts should be understood to be relative to one another. In some embodiments, a high-voltage contact has a positive voltage, and a low-voltage contact has a negative voltage. In some embodiments, the high-voltage contact has a higher voltage than the low-voltage contact. For example, a high-voltage contact may be a 5 Volt (V) contact, and a low-voltage contact may be a 0 V contact. In some embodiments, a voltage between the high-voltage contact and the low-voltage contact is in a range having an upper value, a lower value, or upper and lower values including any of 0.5 V, 1 V, 5 V, 10 V, 15 V, 20 V, 25 V, 50 V, or 100 V. In some examples, the voltage is greater than 0.5 V. In some examples, the voltage is less than 100 V. In some examples, the voltage is in a range between 0.5 V and 100 V. In some examples, the voltage is in a range between 1 V and 20 V.

The voltage between a high-voltage contact and a low-voltage contact can be related to the distance between the neighboring contacts. For example, the voltage between contacts with 1-centimeter spacing therebetween may be greater than the voltage between contacts spaced 3 millimeters apart. The voltage between neighboring contacts can be related to the cooling fluid used in the liquid cooling system. For example, a greater voltage can be applied when the conductivity of the cooling fluid is relatively low. When using a cooling fluid with higher electrical conductivity, the voltage applied across the contacts may be lower.

The logic device according to the invention as claimed, is connected to the plurality of high-voltage contacts and plurality of low-voltage contacts to receive electrical signals from the plurality of high-voltage contacts and plurality of low-voltage contacts when connected by the leaking fluid. The logic device may be configured to measure the current and voltage changes as the electrical signal changes in response to fluid touching the contacts.

In some embodiments, the logic device also includes a processor and a hardware storage device. The processor may receive information from the electrical signals and communicate with one or more other devices according to instructions stored on the hardware storage device that cause the processor to perform any of the methods described herein. In some embodiments, the devices in communication with the logic device that may receive instructions from the logic device in response to detecting a leak includes a cooling fluid pump or another thermal management device, a power supply that provides power to electronic components, the electronic components themselves, or other devices. For example, the logic device may stop the flow of cooling fluid by turning off the cooling fluid pump or by actuating a valve. In other examples, the logic device may send a signal to a power supply for the server rack or row to turn off power to the electronic devices in the rack or row to limit and/or prevent electrical damage due to the leak.

The hardware storage device can be any non-transient computer readable medium that may store instructions thereon. The hardware storage device may be any type of solid-state memory; volatile memory, such as static random access memory (SRAM) or dynamic random access memory (DRAM); non-volatile memory, such as read-only memory (ROM) including programmable ROM (PROM), erasable PROM (ERPOM) or EEPROM; magnetic storage media, such as magnetic tape; a platen-based storage device, such as hard disk drives; optical media, such as compact discs (CD), digital video discs (DVD), Blu-ray Discs, or other optical media; removable media such as USB drives; non-removable media such as internal SATA or non-volatile memory express (NVMe) style NAND flash memory; or any other non-transient storage media.

In some embodiments, a method of detecting leaks according to the present disclosure includes measuring a change in electrical signal from one or more circuits including at least three contacts of a leak detection array. For example, the method can include measuring a first electrical signal on a first circuit including a high-voltage contact and a first low-voltage contact while also measuring a second electrical signal on a second circuit including the high-voltage contact and a second low-voltage contact. In another example, the method can include measuring an electrical signal on a circuit including a two high-voltage contact and a low-voltage contact. In yet another example, the method can include measuring a plurality of electrical signals from two high-voltage contacts and two low-voltage contacts connected by a conductive fluid. The method further includes sending a command to an electronic device to turn off the electronic device. In some embodiments, the electronic device is a server computer. In some embodiments, the electronic device is a component of the liquid cooling system.

To measure a location and size of a fluid leak, substrates according to the present disclosure have arrays of contacts including a plurality of high-voltage contacts and a plurality of low-voltage contacts where each contact has a neighboring contact of the other type. In some embodiments, the contact array includes a dot array with contacts that are individual dots arranged in a checkerboard pattern, where each high-voltage contact has a plurality of neighboring low-voltage contacts and each low-voltage contact has a plurality of neighboring high-voltage contacts. In other embodiments, the dot array can be arranged in a triangular grid, a hexagonal grid, an irregular grid, or other arrangements of the dots. In some embodiments, the closest contact to each high-voltage contact is a low-voltage contact and the closest contact to each low-voltage contact is a high-voltage contact.

A dot array can be used when location information is desired or beneficial. The dot array can complete circuits between high-voltage and low-voltage contacts, and, when the particular contacts of the circuit are identified, the location of the contacts can indicate the location of the fluid on the substrate/array and, in some embodiments, the location of the leak.

In some embodiments, the plurality of high-voltage contacts and plurality of low-voltage contacts are arranged in a concentric pattern where the plurality of high-voltage contacts and a plurality of low-voltage contacts are concentric traces. In a specific example, the concentric traces are circular, creating a bullseye pattern where each radially neighboring ring of the bullseye pattern alternates between a low-voltage contact and a high-voltage contact. In other words, as one moves away from the center of the bullseye pattern, the concentric contacts alternate between a low-voltage contact and a high-voltage contact. In some embodiments, the concentric pattern of the plurality of high-voltage contacts and a plurality of low-voltage contacts may be other shapes, such as rectangles, ovals, squares, hexagons, irregular shapes, any other closed shape, or open shapes. Concentric patterns can allow large area coverage with less discrete contacts for simpler and cheaper manufacturing. Concentric patterns may provide less location information than a dot array while still providing leak size information based on the number of arrays contacted by the fluid.

In some embodiments, the array can be a set of parallel traces. Parallel traces, like concentric patterns, can provide leak size information while providing less location information than a dot array. However, parallel traces are easy and cheap to manufacture for larger area arrays.

In at least some embodiments according to the present disclosure, a contact array with a plurality of high-voltage contacts and a plurality of low-voltage contacts can provide leak location information, leak size information, leak severity (e.g., rate of leak flow), and other information to a logic device, which can then respond to the leak by stopping the leak and/or preventing damage to proximate electronic devices.

The articles "a," "an," and "the" are intended to mean that there are one or more of the elements in the preceding descriptions. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. For example, any element described in relation to an embodiment herein may be combinable with any element of any other embodiment described herein. Numbers, percentages, ratios, or other values stated herein are intended to include that value, and also other values that are "about" or "approximately" the stated value, as would be appreciated by one of ordinary skill in the art encompassed by embodiments of the present disclosure. A stated value should therefore be interpreted broadly enough to encompass values that are at least close enough to the stated value to perform a desired function or achieve a desired result. The stated values include at least the variation to be expected in a suitable manufacturing or production process, and may include values that are within 5%, within 1%, within 0.1%, or within 0.01% of a stated value.

A person having ordinary skill in the art should realize in view of the present disclosure that equivalent constructions do not depart from the scope of the present disclosure, and that various changes, substitutions, and alterations may be made to embodiments disclosed herein without departing from the scope of the present disclosure, with the invention as claimed defined by the appended claims. Equivalent constructions, including functional "means-plus-function" clauses are intended to cover the structures described herein as performing the recited function, including both structural equivalents that operate in the same manner, and equivalent structures that provide the same function. It is the express intention of the applicant not to invoke means-plus-function or other functional claiming for any claim except for those in which the words 'means for' appear together with an associated function. Each addition, deletion, and modification to the embodiments that falls within the scope of the claims is to be embraced by the claims.

It should be understood that any directions or reference frames in the preceding description are merely relative directions or movements. For example, any references to "front" and "back" or "top" and "bottom" or "left" and "right" are merely descriptive of the relative position or movement of the related elements.

The present disclosure may be embodied in other specific forms without departing from its characteristics. The described embodiments are to be considered as illustrative and not restrictive. The scope of the disclosure is, therefore, indicated by the appended claims rather than by the foregoing description. Changes that come within the meaning and range of the claims are to be embraced within their scope.

## Claims

1. A system (226, 326) for detecting liquid leaks in an electronic device (104, 204), the system comprising:
a substrate (330, 530);
a plurality of high-voltage contacts (332, 532, 632, 732) positioned on the substrate;
a plurality of low-voltage contacts (334, 534, 634, 734) positioned on the substrate wherein a closest contact to each of the low-voltage contacts is a high-voltage contact; and
a logic device (336) electrically coupled to the plurality of high-voltage contacts and the plurality of low-voltage contacts, the logic device being configured to measure a change in current across at least one of the plurality of high-voltage contacts and at least one of the plurality of low-voltage contacts, and
wherein the substrate (330) is positioned in the electronic device proximate to a board (328) of the electronic device (104, 204) with one or more electronic components thereon, such that a first high-voltage contact (332, 532, 632, 732) of the plurality of high-voltage contacts is located proximate to and associated with a first electronic component (212, 214, 216, 218, 222) of the electronic device (104, 204) and a second high-voltage contact (332, 532, 632, 732) of the plurality of high-voltage contacts is located proximate to and associated with a second electronic component (212, 214, 216, 218, 220) of the electronic device (104, 204), such that the location of a leak can be identified relative to said first and second electronic components; and
wherein the logic device is further configured to disable the first electronic component independently of the second electronic component.

2. The system of claim 1, wherein the substrate (330, 530) is proximate to a cold plate (322) of the electronic device.

3. The system of claims 1 or 2, wherein a voltage difference between the plurality of high-voltage contacts (332, 532, 632, 732) and the plurality of low-voltage contacts (334, 534, 634, 734) is at least 5 Volts.

4. The system of any preceding claim, wherein the logic device (336) is further configured to disable at least a portion of the electronic device (104, 204) in response to a measured change in current across at least one of the plurality of high-voltage contacts (332, 532, 632, 732) and at least one of the plurality of low-voltage contacts (334, 534, 634, 734).

5. The system of any preceding claim, wherein the logic device (336) is in communication with a cooling fluid pump (338).

6. The system of any preceding claim, wherein the logic device (336) is in communication with a fluid valve.

7. The system of any preceding claim, wherein the plurality of high-voltage contacts (332, 532, 632, 732) and the plurality of low-voltage contacts (334, 534, 634, 734) are arranged in a concentric pattern wherein adjacent contacts of the concentric pattern alternate between high-voltage contacts of the plurality of high-voltage contacts and low-voltage contacts of the plurality of low-voltage contacts.

8. The system of any of claims 1-6, wherein the plurality of high-voltage contacts (332, 532, 632, 732). and the plurality of low-voltage contacts (334, 534, 634, 734) are arranged in a dot array wherein adjacent contacts of the dot array alternate between high-voltage contacts of the plurality of high-voltage contacts and low-voltage contacts of the plurality of low-voltage contacts.

9. The system of any preceding claim, wherein the logic device (336) is further configured to measure a severity of a liquid leak.

10. The system of claim 9, wherein the logic device (336) measures the severity of the liquid leak at least partially based on a quantity of the high-voltage contacts and low-voltage contacts electrically coupled by the liquid leak.

11. The system of claim 9, wherein the logic device (336) measures the severity of the liquid leak at least partially based on a measured change in current between the plurality of high-voltage contacts and plurality of low-voltage contacts.

12. The system of claim 9, wherein the logic device (336) measures the severity of the liquid leak at least partially based on a measured change in voltage between the plurality of high-voltage contacts and the plurality of low-voltage contacts.

## Patentansprüche

1. System (226, 326) zum Erkennen von Flüssigkeitsleckagen in einer elektronischen Vorrichtung (104, 204), wobei das System Folgendes umfasst:
ein Substrat (330, 530);
eine Vielzahl von Hochspannungskontakten (332, 532, 632, 732), die auf dem Substrat positioniert sind;
eine Vielzahl von Niederspannungskontakten (334, 534, 634, 734), die auf dem Substrat positioniert sind, wobei ein nächster Kontakt zu jedem der Niederspannungskontakte ein Hochspannungskontakt ist; und
eine Logikvorrichtung (336), die elektrisch mit der Vielzahl von Hochspannungskontakten und der Vielzahl von Niederspannungskontakten gekoppelt ist, wobei die Logikvorrichtung dazu konfiguriert ist, eine Änderung des Stroms über mindestens einem der Vielzahl von Hochspannungskontakten und mindestens einem der Vielzahl von Niederspannungskontakten zu messen, und
wobei das Substrat (330) in der elektronischen Vorrichtung in der Nähe einer Platine (328) der elektronischen Vorrichtung (104, 204) mit einer oder mehreren elektronischen Komponenten darauf derart positioniert ist, dass sich ein erster Hochspannungskontakt (332, 532, 632, 732) der Vielzahl von Hochspannungskontakten in der Nähe von und in Verbindung mit einer ersten elektronischen Komponente (212, 214, 216, 218, 222) der elektronischen Vorrichtung (104, 204) befindet und sich ein zweiter Hochspannungskontakt (332, 532, 632, 732) der Vielzahl von Hochspannungskontakten in der Nähe von und in Verbindung mit einer zweiten elektronischen Komponente (212, 214, 216, 218, 220) der elektronischen Vorrichtung (104, 204) befindet, sodass der Ort einer Leckage in Bezug auf die erste und die zweite elektronische Komponente identifiziert werden kann; und
wobei die Logikvorrichtung ferner dazu konfiguriert ist, die erste elektronische Komponente unabhängig von der zweiten elektronischen Komponente zu deaktivieren.

2. System nach Anspruch 1, wobei sich das Substrat (330, 530) in der Nähe einer Kühlplatte (322) der elektronischen Vorrichtung befindet.

3. System nach Anspruch 1 oder 2, wobei ein Spannungsunterschied zwischen der Vielzahl von Hochspannungskontakten (332, 532, 632, 732) und der Vielzahl von Niederspannungskontakten (334, 534, 634, 734) mindestens 5 Volt beträgt.

4. System nach einem vorhergehenden Anspruch, wobei die Logikvorrichtung (336) ferner dazu konfiguriert ist, mindestens einen Teil der elektronischen Vorrichtung (104, 204) als Reaktion auf eine gemessene Änderung des Stroms über mindestens einem der Vielzahl von Hochspannungskontakten (332, 532, 632, 732) und mindestens einem der Vielzahl von Niederspannungskontakten (334, 534, 634, 734) zu deaktivieren.

5. System nach einem vorhergehenden Anspruch, wobei die Logikvorrichtung (336) mit einer Kühlfluidpumpe (338) kommuniziert.

6. System nach einem vorhergehenden Anspruch, wobei die Logikvorrichtung (336) mit einem Fluidventil kommuniziert.

7. System nach einem vorhergehenden Anspruch, wobei die Vielzahl von Hochspannungskontakten (332, 532, 632, 732) und die Vielzahl von Niederspannungskontakten (334, 534, 634, 734) in einem konzentrischen Muster angeordnet sind, wobei sich bei nebeneinander liegenden Kontakten des konzentrischen Musters Hochspannungskontakte der Vielzahl von Hochspannungskontakten und Niederspannungskontakte der Vielzahl von Niederspannungskontakten abwechseln.

8. System nach einem der Ansprüche 1-6, wobei die Vielzahl von Hochspannungskontakten (332, 532, 632, 732). und die Vielzahl von Niederspannungskontakten (334, 534, 634, 734) in einer Punktmatrix angeordnet sind, wobei sich bei nebeneinander liegenden Kontakten der Punktmatrix Hochspannungskontakte der Vielzahl von Hochspannungskontakten und Niederspannungskontakte der Vielzahl von Niederspannungskontakten abwechseln.

9. System nach einem vorhergehenden Anspruch, wobei die Logikvorrichtung (336) ferner dazu konfiguriert ist, eine Schwere einer Flüssigkeitsleckage zu messen.

10. System nach Anspruch 9, wobei die Logikvorrichtung (336) die Schwere der Flüssigkeitsleckage mindestens teilweise basierend auf einer Menge der Hochspannungskontakte und Niederspannungskontakte misst, die durch die Flüssigkeitsleckage elektrisch gekoppelt sind.

11. System nach Anspruch 9, wobei die Logikvorrichtung (336) die Schwere der Flüssigkeitsleckage mindestens teilweise basierend auf einer gemessenen Änderung des Stroms zwischen der Vielzahl an Hochspannungskontakten und der Vielzahl an Niederspannungskontakten misst.

12. System nach Anspruch 9, wobei die Logikvorrichtung (336) die Schwere der Flüssigkeitsleckage mindestens teilweise basierend auf einer gemessenen Änderung der Spannung zwischen der Vielzahl an Hochspannungskontakten und der Vielzahl an Niederspannungskontakten misst.

## Revendications

1. Système (226, 326) de détection de fuites de liquide dans un dispositif électronique (104, 204), le système comprenant :
un substrat (330, 530) ;
une pluralité de contacts haute tension (332, 532, 632, 732) positionnés sur le substrat ;
une pluralité de contacts basse tension (334, 534, 634, 734) positionnés sur le substrat, dans lequel un contact le plus proche de chacun des contacts basse tension est un contact haute tension ; et
un dispositif logique (336) couplé électriquement à la pluralité de contacts haute tension et à la pluralité de contacts basse tension, le dispositif logique étant configuré pour mesurer une variation de courant à travers au moins l'un de la pluralité de contacts haute tension et au moins l'un de la pluralité de contacts basse tension, et
dans lequel le substrat (330) est positionné dans le dispositif électronique à proximité d'une carte (328) du dispositif électronique (104, 204) ayant sur lui un ou plusieurs composants électroniques, de telle sorte qu'un premier contact haute tension (332, 532, 632, 732) de la pluralité de contacts haute tension est situé à proximité et associé à un premier composant électronique (212, 214, 216, 218, 222) du dispositif électronique (104, 204) et un second contact haute tension (332, 532, 632, 732) de la pluralité de contacts haute tension est situé à proximité et associé à un second composant électronique (212, 214, 216, 218, 220) du dispositif électronique (104, 204), de telle sorte que l'emplacement d'une fuite peut être identifié par rapport auxdits premier et second composants électroniques ; et
dans lequel le dispositif logique est en outre configuré pour désactiver le premier composant électronique indépendamment du second composant électronique.

2. Système selon la revendication 1, dans lequel le substrat (330, 530) est proche d'une plaque froide (322) du dispositif électronique.

3. Système selon les revendications 1 ou 2, dans lequel une différence de tension entre la pluralité de contacts haute tension (332, 532, 632, 732) et la pluralité de contacts basse tension (334, 534, 634, 734) est d'au moins 5 volts.

4. Système selon une quelconque revendication précédente, dans lequel le dispositif logique (336) est en outre configuré pour désactiver au moins une partie du dispositif électronique (104, 204) en réponse à une variation de courant mesurée à travers au moins l'un de la pluralité de contacts haute tension (332, 532, 632, 732) et au moins l'un de la pluralité de contacts basse tension (334, 534, 634, 734).

5. Système selon une quelconque revendication précédente, dans lequel le dispositif logique (336) est en communication avec une pompe à fluide de refroidissement (338).

6. Système selon une quelconque revendication précédente, dans lequel le dispositif logique (336) est en communication avec une vanne de fluide.

7. Système selon une quelconque revendication précédente, dans lequel la pluralité de contacts haute tension (332, 532, 632, 732) et la pluralité de contacts basse tension (334, 534, 634, 734) sont disposés selon un motif concentrique dans lequel les contacts adjacents du motif concentrique alternent entre des contacts haute tension de la pluralité de contacts haute tension et des contacts basse tension de la pluralité de contacts basse tension.

8. Système selon l'une quelconque des revendications 1 à 6, dans lequel la pluralité de contacts haute tension (332, 532, 632, 732). et la pluralité de contacts basse tension (334, 534, 634, 734) sont disposés dans un réseau de points dans lequel les contacts adjacents du réseau de points alternent entre des contacts haute tension de la pluralité de contacts haute tension et des contacts basse tension de la pluralité de contacts basse tension.

9. Système selon une quelconque revendication précédente, dans lequel le dispositif logique (336) est en outre configuré pour mesurer une gravité d'une fuite de liquide.

10. Système selon la revendication 9, dans lequel le dispositif logique (336) mesure la gravité de la fuite de liquide au moins partiellement sur la base d'une quantité des contacts haute tension et des contacts basse tension couplés électriquement par la fuite de liquide.

11. Système selon la revendication 9, dans lequel le dispositif logique (336) mesure la gravité de la fuite de liquide au moins partiellement sur la base d'une variation de courant mesurée entre la pluralité de contacts haute tension et la pluralité de contacts basse tension.

12. Système selon la revendication 9, dans lequel le dispositif logique (336) mesure la gravité de la fuite de liquide au moins partiellement sur la base d'une variation de tension mesurée entre la pluralité de contacts haute tension et la pluralité de contacts basse tension.
